# EUROPÄISCHE PATENTSCHRIFT

(11) **EP 3 307 447 B1**
(45) Veröffentlichungstag und Bekanntmachung des Hinweises auf die Patenterteilung: **15.01.2020**
(21) Anmeldenummer: 16727482.8
(22) Anmeldetag: 07.06.2016
(51) Int. Cl.: B21B 35/14

(54) **VORRICHTUNG ZUM ÜBERTRAGEN EINES DREHMOMENTS VON EINER ANTRIEBSEINRICHTUNG AUF EINE WALZE IN EINEM WALZGERÜST**
DEVICE FOR TRANSMITTING A TORQUE FROM A DRIVE DEVICE ONTO A ROLLER IN A ROLL STAND
DISPOSITIF DE TRANSMISSION D'UN COUPLE D'UN DISPOSITIF D'ENTRAÎNEMENT VERS LE ROULEAU D'UNE CAGE DE LAMINOIR

(30) Priorität: 10.06.2015 DE 102015210596; 30.11.2015 DE 102015223641
(43) Veröffentlichungstag der Anmeldung: 18.04.2018
(73) Patentinhaber: SMS group GmbH, 40237 Düsseldorf (DE)
(72) Erfinder: MERZ, Jürgen, 57223 Kreuztal (DE); SCHEFFE, Kurt, 57271 Hilchenbach (DE)
(74) Vertreter: Klüppel, Walter
(86) Internationale Anmeldenummer: PCT/EP2016/062825
(87) Internationale Veröffentlichungsnummer: WO 2016/198365

(56) Entgegenhaltungen:
- WO-A1-2010/107849
- DE-C1- 3 303 929

## Beschreibung

Die Erfindung betrifft eine Vorrichtung zum Übertragen eines Drehmomentes von einer Antriebseinrichtung auf eine Walze in einem Walzgerüst zum Walzen von vorzugsweise metallischem Walzgut. Derartige Vorrichtungen sind im Stand der Technik grundsätzlich bekannt, so z. B. aus den Druckschriften DE 33 03 929 C1, DE 2 234 215, DE 1 902 894 oder DE 35 39 535 C2.

Die deutsche Patentschrift DE 925 284 offenbart zumindest implizit eine Vorrichtung zum Übertragen eines Drehmomentes von einer Antriebseinrichtung auf eine Walze in einem Walzgerüst. Zu diesem Zweck umfasst die Vorrichtung eine Spindel, welche über ein antriebsseitiges Drehlager mit einer Antriebseinrichtung verbunden ist. Walzenseitig ist die Spindel über ein walzenseitiges Drehlager mit dem Zapfen einer Walze drehgekoppelt. Es sind weiterhin mindestens zwei Pumpeinrichtungen offenbart zum Pumpen von Schmiermittel. Die Pumpeinrichtungen umfassen jeweils einen radial außermittig an der walzenseitigen Stirnseite der Spindel gelagerten Schmiermittelkolben mit einer Festseite und einer Losseite. Mit seiner Festseite ist der Schmiermittelkolben in dem walzenseitigen Drehlager in axialer Richtung festgelegt. Mit seiner Losseite ist der Schmiermittelkolben dagegen in einem Kanal an seinem walzenseitigen Ende verschiebbar gelagert. Der Teilkanal und der Schmiermittelkolben bilden eine Kolben-Zylindereinheit. Wenn das antriebsseitige und das walzenseitige Drehlager derart versetzt zueinander angeordnet sind, dass die Abtriebswelle der Antriebseinrichtung und der Zapfen der Walze nicht miteinander fluchten, dann stehen die Längsachse der Spindel und die Längsachse des Walzenzapfens schräg zueinander. Bei dieser Konstellation wird bei einer Rotation der Spindel der Schmiermittelkolben in dem Teilkanal hin und her bewegt, d. h. er führt eine Pendelhubbewegung aus. Aufgrund dieser Pendelhubbewegung des Kolbens wird Schmiermittel aus einem externen an der Spindel angeordneten Behälter in die eigentliche Gelenkverbindung zwischen Spindel und Walzenzapfen gepumpt und gefördert. Der externe Behälter muss regelmäßig mit frischem und vor allem kühlem Schmiermittel nachgefüllt werden.

Die WO 2010/107849 A1 offenbart sämtliche Merkmale des Oberbegriffs des Patentanspruchs 1.

Der Erfindung liegt die Aufgabe zugrunde, die Schmiermittelversorgung einer bekannten Vorrichtung zum Übertragen eines Drehmomentes von einer Antriebseinrichtung auf eine Walze autark, d. h. unabhängig von einer äußeren Schmiermittelzufuhr zu gestalten.

Diese Aufgabe wird durch den Gegenstand des Anspruchs 1 gelöst. Dieser ist dadurch gekennzeichnet, dass in dem antriebsseitigen Drehlager ein Schmiermittelraum ausgebildet ist, und dass die Schmiermittelräume in dem walzenseitigen und dem antriebsseitigen Drehlager über einen Hinlaufkanal und einen Rücklaufkanal fluidleitend miteinander verbunden sind, wodurch ein geschlossener Kreislauf für das Schmiermittel ausgebildet ist.

"Im Bereich" der Spindel bedeutet beispielsweise "im Inneren" der Spindel und/oder an der Peripherie der Spindel zwischen deren Außenseite und einem koaxial zu der Spindel angeordneten Schutzrohr.
Der geschlossene Kreislauf für das Schmiermittel bietet den Vorteil, dass eine kontinuierliche Zufuhr von Schmiermittel von außen während des laufenden Walzbetriebs entbehrlich wird. Ein gelegentlich notwendiger Austausch des Schmiermittels kann z. B. in Walzpausen erfolgen.

Die Begriffe "Hinlaufkanal" und "Rücklaufkanal" beziehen sich lediglich beispielhaft auf die Fließrichtung des Schmiermittels in Bezug auf die Antriebsseite. Das Schmiermittel kann auch in die entgegengesetzte Richtung fließen; dann wären die Beziehungen der beiden Kanäle sinnvollerweise zu vertauschen.

Bei dem Schmiermittel handelt es sich beispielsweise um Öl.

Das Schmiermittelvolumen zirkuliert in einem vollständig geschlossenen Kreislauf. Damit werden externe Anschlüsse, Pumpen, Kühler, Drehölzuführen etc. vermieden. Die erforderlichen Dichtungen sind konventioneller Art. Die beanspruchte Vorrichtung ist vorteilhafterweise autark und erfordert keinerlei Sensorik und - außer der Energiezufuhr für bzw. durch die Antriebseinrichtung - keine weitere Energiezufuhr. Durch die Nutzung des Spindelinneren und des Schutzrohres als Schmiermittelvolumen, plus der Schmiermittelräume in den Drehlagern erhöht sich die gesamte Schmiermittelmenge, so dass die erzeugte Wärmemenge nicht nur auf ein größeres Volumen verteilt werden kann, sondern auch über das Schutzrohr nach außen abgegeben werden kann. Je nach Spindellänge ergibt sich beispielsweise ein Gesamtschmiermittelvolumen von 10 bis 30 Litern.

Gemäß einem Ausführungsbeispiel ist die Spindel als Zahngelenkspindel ausgebildet, die an ihren beiden Enden jeweils eine Außenverzahnung trägt. An ihrem walzenseitigen Ende steht die Spindel über ihre Außenverzahnung mit einer Innenverzahnung in dem walzenseitigen Drehlager drehgekoppelt in Eingriff. Analog steht die Spindel mit der Außenverzahnung an ihrem antriebsseitigen Ende mit der Innenverzahnung in dem antriebsseitigen Drehlager drehgekoppelt in Eingriff.

Die Schmiermittelräume in dem antriebsseitigen und dem walzenseitigen Drehlager sind zu der Antriebseinrichtung bzw. zu dem Zapfen der Walze hin jeweils durch eine sich radial erstreckende Trennwand im Inneren der jeweiligen Hülse der Drehlager abgedichtet. In radialer Richtung erfolgt die Abdichtung durch die Hülsen selbst und zu der Walzen- bzw. zu der Antriebsseite hin erfolgt die Abdichtung der Schmiermittelräume jeweils durch eine auf die Spindel aufgesetzte Ringdichtung.

Gemäß einem weiteren Ausführungsbeispiel ist die mindestens eine Pumpeinrichtung so gestaltet, dass sie durch die Rotation der Spindel angetrieben wird. Die mindestens eine erfindungsgemäße Pumpeinrichtung ist durch einen Kanalabschnitt des Kreislaufs gebildet, welcher den mit dem Rücklaufkanal verbundenen Schmiermittelraum in vorzugsweise dem walzenseitigen Drehlager mit dem Hinlauf im Bereich der Spindel fluidleitend verbindet. Die Pumpeinrichtung umfasst weiterhin einen radial außermittig vorzugsweise an der walzenseitigen Stirnseite der Spindel gelagerten Schmiermittelkolben mit einer Festseite und einer Losseite. Mit seiner Festseite ist der Schmiermittelkolben an der Trennwand in der vorzugsweise walzenseitigen Hülse in axialer Richtung festgelegt. Mit seiner Losseite ist der Schmiermittelkolben dagegen in einem Teilkanal des Kanalabschnitts an der vorzugsweise walzenseitigen Stirnseite der Spindel verschiebbar gelagert, wobei der Teilkanal und der Schmiermittelkolben eine erste Kolben-Zylinder-Einheit bilden.

Alternativ oder zusätzlich kann eine solche Pumpeinrichtung auch in dem antriebsseitigen Drehlager ausgebildet sein.

Wenn bei dieser Ausgestaltung der Pumpeinrichtung das antriebsseitige und das walzenseitige Drehlager derart versetzt zueinander angeordnet sind, dass die Abtriebswelle der Antriebseinrichtung und der Zapfen der Walze nicht miteinander fluchten, ist die Spindel schräg zu dem Walzenzapfen angestellt. Dies ist die Voraussetzung dafür, dass der Schmiermittelkolben bei der beschriebenen Ausführungsform der Pumpeinrichtung mit seiner Losseite die besagte Pendelhubbewegung in dem Teilkanal ausführt; auf diese Weise kann das Schmiermittel in dem Kreislauf gefördert werden. Ein externer Antrieb für die Pumpeinrichtung ist nicht erforderlich, vielmehr wird diese ausschließlich durch die Rotation der Spindel angetrieben.

Insbesondere in den Fällen, in denen die Walzen in dem Walzgerüst während des Walzbetriebs axial verschoben werden, kann sich die Position von insbesondere dem antriebsseitigen Ende der Spindel innerhalb des antriebsseitigen Drehlagers, insbesondere innerhalb von dessen antriebsseitiger Hülse ändern. Konkret ist beispielsweise das antriebsseitige Ende der Spindel innerhalb der antriebsseitigen Hülse - bezogen auf die Längsachse der Hülse - axial verschiebbar; die Hülse und die darin ausgebildete Innenverzahnung sind entsprechend lang ausgebildet. Bei einer derartigen axialen Verschiebung eines Endes der Spindel innerhalb der Hülse ändert sich das Volumen des Schmiermittelraumes innerhalb des Drehlagers. Bei einer Vergrößerung des Schmiermittelraumes muss dem Kreislauf mehr Schmiermittel zugeführt werden, während umgekehrt, bei einer Verringerung des Volumens, Schmiermittel aus dem Kreislauf herausgenommen und in einem Reservoir zwischengespeichert werden. Die Funktion des Reservoirs übernimmt ein vorzugsweise an der Außenseite der Spindel angeordneter Ausgleichsbehälter, welcher fluidleitend mit dem Kreislauf für das Schmiermittel verbunden ist. Der Ausgleichsbehälter ist vorzugsweise in Form einer zweiten Kolben-Zylinder-Einheit ausgebildet, wobei ein ringförmiger Ausgleichszylinder an der Außenseite der Spindel und koaxial zu deren Längssachse angeordnet ist. Weiterhin ist in dem ringförmigen Ausgleichszylinder ein ringförmiger Schwimmkolben axial verschiebbar geführt, wobei der Schwimmkolben mit seiner einen Stirnseite dem Druck der Umgebungsluft ausgesetzt ist und mit seiner anderen Stirnseite das Reservoir für das Schmiermittel begrenzt.

Der Hinlaufkanal oder der Rücklaufkanal für das Schmiermittel ist vorzugsweise gegenüber der neutralen Faser radial nach außen versetzt innerhalb oder an der Peripherie der Spindel vorzugsweise zwischen der Außenwand der Spindel und einem die Spindel umgebenden Schutzrohr ausgebildet, vorzugsweise koaxial. Die Stärke der Außenwand des radial nach außen versetzten Kanals, sollte einen vorgegebenen Dickenschwellenwert nicht übersteigen, wobei der Dickenschwellenwert so gewählt ist, dass eine gewünschte Wärmemenge des in dem Kanal fließenden Schmiermittels über die Außenwand per Konvektion an die Umgebung abgegeben werden kann. Insofern fungiert die Außenwand der Spindel bzw. die Außenwand des nach außen versetzten Kanals als Wärmetauscher zum Abkühlen des in den Drehlagern erwärmten und von dort abgeführten Schmiermittels.

Vorzugsweise ist in dem walzenseitigen Drehlager eine Kugelgelenkverbindung vorgesehen zum Verbinden der walzenseitigen Stirnseite der Spindel mit der ortsfesten Trennwand in der walzenseitigen Hülse. Auf diese Weise wird sichergestellt, dass insbesondere translatorische Bewegungen der Walze bzw. des Walzenzapfens auf die Spindel übertragen werden, wobei die Kugelgelenkverbindung dabei vorteilhafterweise eine sich aus der translatorischen Bewegung ergebende Veränderung des Winkels der Schrägstellung von Spindel zu Walzenzapfen toleriert. Die doppelt-gestaltete Kugelkopfverbindung stellt eine form- und kraftschlüssige Verbindung dar. Sie erlaubt es, einer Pendelhubbewegung der Spindel bei einer Schrägstellung von Spindel zur Längsachse der Walze bzw. des Walzenzapfens zu folgen, ohne dass die Hülse eine Pendelbewegung ausführt. Weiterhin ist die Materialpaarung der Kugelkopfverbindung so gewählt, dass keine zusätzliche Dichtung erforderlich ist.

Der Beschreibung sind drei Figuren beigefügt, wobei
- Figur 1: einen Längsschnitt durch die gesamte Vorrichtung;
- Figur 2: eine Detailansicht des walzenseitigen Drehlagers mit der Pumpeinrichtung; und
- Figur 3: eine Detailansicht des antriebsseitigen Drehlagers mit darin gelagerter Spindel
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

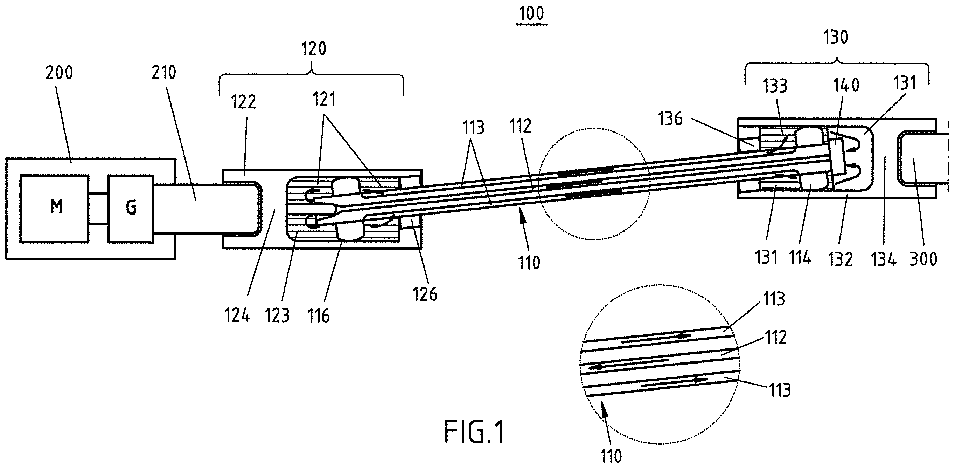

Figur 1 zeigt die erfindungsgemäße Vorrichtung 100 zum Übertragen eines Drehmomentes von einer Antriebseinrichtung 200 auf den Zapfen 300 einer Walze in einem Walzgerüst zum Walzen von vorzugsweise metallischem Walzgut.

Die Antriebseinrichtung 200 besteht typischerweise aus einer Motoreinheit M und einem nachgeschalteten Getriebe G, welches ein Drehmoment an seiner Abtriebswelle 210 abgibt. Über ein antriebsseitiges Drehlager 120 sind die Antriebsspindel 210 und das antriebsseitige Ende einer Spindel 110 miteinander drehgekoppelt. Das gegenüberliegende walzenseitige Ende der Spindel ist über ein walzenseitiges Drehlager 130 mit dem Zapfen 300 der Walze drehgekoppelt. In dem antriebsseitigen Drehlager ist ein antriebsseitiger Schmiermittelraum 121 ausgebildet und in dem walzenseitigen Drehlager 130 ist ein walzenseitiger Schmiermittelraum 131 ausgebildet. In den Schmiermittelräumen 121, 131 sind die jeweiligen Enden der Spindel 110 mit den Drehlagern drehgekoppelt. Die beiden Schmiermittelräume sind über einen Hinlaufkanal 112 und einen Rücklaufkanal 113 für das Schmiermittel im Bereich der Spindel 110 fluidleitend miteinander verbunden. Auf diese Weise wird ein geschlossener Kreislauf für das Schmiermittel zwischen den beiden Schmiermittelräumen 121, 131 realisiert.

Die Zirkulation des Schmiermittels innerhalb des Kreislaufs wird mit Hilfe einer Pumpeinrichtung 140 realisiert, welche in den Kreislauf eingebaut bzw. integriert ist. Die Pumpeinrichtung 140 bildet einen Kanalabschnitt des Kreislaufs, welcher bei dem in Figur 1 gezeigten Ausführungsbeispiel den mit dem Rücklaufkanal 113 verbundenen Schmiermittelraum 131 des walzenzeitigen Drehlagers 130 mit dem Hinlaufkanal 112 im Inneren der Spindel fluidleitend verbindet.

Wesentlicher Bestandteil des walzenseitigen Drehlagers 130 ist eine mit dem Zapfen 300 der Walze drehfest verbundene walzenseitige Hülse. In dieser Hülse ist das walzenseitige Ende der Spindel, die als Zahngelenkspindel ausgebildet ist, über seine Außenverzahnung 114 mit einer Innenverzahnung 133 der walzenseitigen Hülse 132 drehgekoppelt. Der Schmiermittelraum 131 in dem walzenseitigen Drehlager 130 ist zu dem Zapfen der Walze hin durch eine sich im Inneren der walzenseitigen Hülse radial erstreckende Trennwand 134 abgetrennt und abgedichtet. In radialer Richtung ist der Schmiermittelraum 131 durch die walzenseitige Hülse 132 und zur Antriebsseite hin ist der Schmiermittelraum durch eine auf die Spindel 110 aufgesetzte Ringdichtung 136 abgedichtet und begrenzt. Wie in Figur 1 zu erkennen ist, wird das walzenseitige Ende der Spindel 110 mit seiner Außenverzahnung 114 und der Pumpeinrichtung 140 komplett von Schmiermittel in dem walzenzeitigen Schmiermittelraum 131 umspült. Das Schmiermittel wird über den Rücklaufkanal 113 der Spindel dem Schmiermittelraum 131 zugeführt und über die Pumpeinrichtung 140 in den Hinlaufkanal 112 abgeführt.

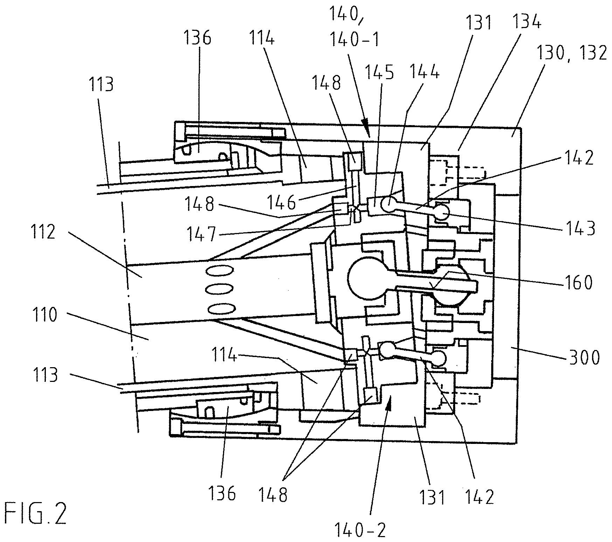

Das antriebsseitige Drehlager 120 ist ähnlich wie das walzenseitige Drehlager 130 aufgebaut. Es besteht im Wesentlichen aus einer antriebsseitigen Hülse 122, in welcher die Abtriebswelle 210 der Antriebseinrichtung 200 drehfest gelagert ist. Eine sich radial innerhalb der Hülse 122 erstreckende Trennwand 124 trennt den Bereich der Ankopplung der Abtriebswelle 210 von einem antriebsseitigen Schmiermittelraum 121 ab. In dem antriebsseitigen Schmiermittelraum 121 innerhalb der antriebsseitigen Hülse 122 ist das antriebsseitige Ende der Spindel 110 über seine Außenverzahnung 116 mit einer Innenverzahnung 123 der antriebsseitigen Hülse drehgekoppelt. Der antriebsseitige Schmiermittelraum 121 wird zum einen durch die besagte Trennwand 124 und darüber hinaus in radialer Richtung durch die antriebsseitige Hülse 122 und zu der Walzenseite hin durch eine auf die Spindel 110 aufgesetzte Ringdichtung 126 abgedichtet und begrenzt. Figur 2 zeigt das walzenseitige Drehlager mit einer Detailansicht von insbesondere der Trennwand 134 und der Pumpeinrichtung 140. In Figur 2 sind zwei Pumpeinrichtungen 140-1, 140-2 zu erkennen, die an der walzenseitigen Stirnseite der Spindel 110 über den Umfang verteilt angeordnet sind. Jede der Pumpeinrichtungen bildet einen Kanalabschnitt des Schmiermittelkreislaufs, weil sie jeweils zwischen den Rücklauf 113 und den Hinlauf 112 des Schmiermittels geschaltet ist. Anders ausgedrückt: mit der Pumpeinrichtung 140 werden der Rücklaufkanal und der Hinlaufkanal fluidleitend für das Schmiermittel miteinander verbunden. Jede der Pumpeinrichtungen 140-1, 140-2 weist einen radial außermittig an der Stirnseite der Spindel gelagerten Schmiermittelkolben 142 auf, wobei der Schmiermittelkolben eine Festseite 143 und eine Losseite 144 aufweist. Der Schmiermittelkolben ist mit seiner Festseite an der Trennwand 134 in axialer Richtung festgelegt und mit seiner Losseite in einem Teilkanal 145 des Kanalabschnitts an der walzenseitigen Stirnseite der Spindel verschiebbar gelagert. Der besagte Teilkanal 145 und der Schmiermittelkolben 142 bilden eine erste Kolben-Zylinder-Einheit, mit welcher das Schmiermittel gepumpt wird. Die Funktionsweise der Pumpeinrichtung wird weiter unten in der Beschreibung erläutert.

Neben der besagten Kolben-Zylinder-Einheit umfasst die Pumpeinrichtung 140 bzw. der Kanalabschnitt der Pumpeinrichtung eine Mehrzahl von sternförmig angeordneten fluidleitend miteinander kommunizierenden Teilkanälen 145, 146, 147. Eine erste Anzahl dieser Teilkanäle mündet in den Schmiermittelraum 131, während eine zweite Anzahl der Teilkanäle 147 in den Hinlaufkanal 112 der Spindel 110 mündet. Weiterhin ist der besagte Teilkanal 145 der ersten Kolben-Zylinder-Einheit Teil des Kanalabschnitts und fluidleitend mit den anderen Teilkanälen verbunden. Die erste Anzahl von Teilkanälen 146 ist zu dem Schmiermittelraum 131 hin über ein Rückschlagventil 148 verschließbar. Analog ist die zweite Anzahl von Teilkanälen 147, welche in den Hinlaufkanal 112 der Spindel 110 münden, mit Rückschlagventilen 148 verschließbar. Die Kanalabschnitte der einzelnen Pumpeinrichtung 140-1, 140-2 sind jeweils fluidleitend parallel geschaltet.

Weiterhin ist in Figur 2 eine Kugelgelenkverbindung 160 zu erkennen, über welche die walzenseitige Stirnseite der Spindel 110 mit der Trennwand 134 in der walzenseitigen Hülse 130 verbunden ist. Die Kugelgelenkverbindung dient zur Aufnahme bzw. zur Übertragung von translatorischen Kräften und Bewegungen in axialer Richtung. Wenn die Walze mit ihrem Walzenzapfen 300 z. B. während des Walzbetriebs axial verschoben wird, so wird die Spindel über die Drehgelenkverbindung axial mit verschoben.

Die Pumpeinrichtung 140 funktioniert wie folgt:
Voraussetzung ist zunächst, dass das antriebsseitige und das walzenseitige Drehlager 120, 130 derart versetzt zueinander angeordnet sind, dass die Abtriebswelle der Antriebseinrichtung und der Zapfen 300 der Walze nicht miteinander fluchten. Bei dieser Konstellation sind dann die Längsachse der Spindel 110 und die Längsachse der Walze bzw. des Walzenzapfens 300 schräg zueinander gestellt, wie dies beispielsweise in Figur 2 dargestellt ist.

Bei der in Figur 2 gezeigten Momentaufnahme ist der obere Schmiermittelkolben 142 innerhalb der ersten Kolben-Zylinder-Einheit weit nach rechts ausgefahren und gibt somit ein recht großes Volumen des Teilkanals 145 frei. Bei dieser Konstellation entsteht ein Unterdruck in den übrigen mit dem Teilkanal 145 fluidleitend verbundenen Teilkanälen 146 und 147, wodurch erreicht wird, dass bei entsprechender Schaltung der Rückschlagventile 148 das der Spindel zugewandte Rückschlagventil geschlossen und die dem Schmiermittelraum 131 zugeordneten Rückschlagventile 148 geöffnet werden. Es wird dann Schmiermittel aus dem walzenseitigen Schmiermittelraum 131 in die Pumpeinrichtung 140 bzw. genauer gesagt in deren Teilkanäle angesaugt.

Bei einer Rotation der Spindel 110 unter Beibehaltung von deren Schrägstellung zum Walzenzapfen verlagert sich der Schmiermittelkolben 142 zunehmend innerhalb des Teilkanals 145 in Richtung auf die Spindel 110 zu, wodurch sich in dem Kanalabschnitt bzw. dessen Teilkanälen ein Überdruck aufbaut. Die bei einer halben Umdrehung der Spindel später erreichte Endstellung des Schmiermittelkolbens 142 ist in Figur 2 bei dem unteren Schmiermittelkolben zu erkennen. In dieser Position des Schmiermittelkolbens 142 bewirkt der besagte Überdruck innerhalb der Teilkanäle, dass die Rückschlagventile zu dem Schmiermittelraum 131 hin geschlossen werden und das Rückschlagventil zu dem Hinlaufkanal 112 hin geöffnet wird. Das zuvor in die Teilkanäle angesaugte Schmiermittel wird dann aufgrund des Überdrucks in den Hinlaufkanal 112 abgepumpt. Bei kontinuierlicher Rotation der Spindel erfolgt eine kontinuierliche Pumpbewegung des Schmiermittels aus dem Zahnbereich des Schmiermittelraums in den Hinlaufkanal der Spindel. Das Schmiermittel ist im Zahnbereich einer starken Belastung ausgesetzt und wird dadurch erwärmt. Mit Hilfe der Pumpeinrichtung wird es aus dem Lastbereich entfernt und kann sich beim Durchfluss durch die Spindel wieder abkühlen. Für den Pumpvorgang ist es essentiell erforderlich, dass flüssiges Schmiermittel, insbesondere Öl, jedoch kein Fett verwendet wird. Je nach Stellung der Spindel muss das Schmiermittel unter Umständen "Bergauf fließen". Flüssiges Öl kann entsprechend gepumpt werden, Fett fehlt diese Eigenschaft. Sinnvolle Öle sind vom Typ ISO VG 220 (flüssig) bis ISO VG 1.000 (dickflüssig). Der ideale Temperaturbereich von ca. 40°C stellt sich durch die Walzwerksnähe und deren Belastung meist selbst ein. Der Pumpendruck liegt bei > 1 bar.

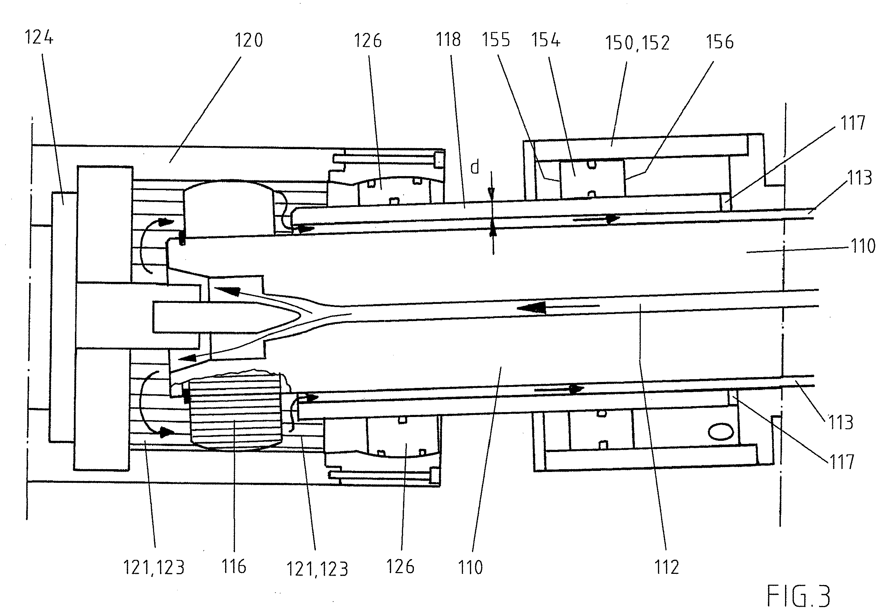

Figur 3 zeigt im Wesentlichen das bereits aus Figur 1 bekannte antriebsseitige Drehlager 120 mit dem darin drehgekoppelt gelagerten antriebsseitigen Ende der Spindel 110. Auch hier ist zu erkennen, dass der Hinlaufkanal 112 für das Schmiermittel im Inneren der Spindel in den antriebsseitigen Schmiermittelraum 121 mündet und dass das Schmiermittel von dort nach Durchtritt durch das Zahngelenk mit der Außenverzahnung 116 und der Innenverzahnung 123 in den Rücklaufkanal 113 geleitet wird.

Weiterhin ist in Figur 3 ein Ausgleichsbehälter 150 als Reservoir für das flüssige Schmiermittel zu erkennen, welcher über einen Verbindungskanal 117 fluidleitend mit dem Kreislauf für das Schmiermittel, in Figur 3 beispielsweise mit dem Rücklaufkanal 113 verbunden ist.

Der Ausgleichsbehälter 150 ist in Form einer zweiten Kolben-Zylinder-Einheit ausgebildet. Er umfasst in der lediglich beispielhaften Ausgestaltung nach Figur 3 einen ringförmigen Ausgleichszylinder 152 an der Außenseite der Spindel 110, welcher vorzugsweise koaxial zu deren Längsachse angeordnet ist. In dem ringförmigen Ausgleichszylinder 152 ist ein ringförmiger Schwimmkolben 154 axial, d. h. beispielsweise parallel zur Längsachse der Spindel, verschiebbar geführt. Der Schwimmkolben ist mit seiner einen Stirnseite 155 dem Druck der Umgebungsluft ausgesetzt und mit seiner anderen Stirnseite 156 begrenzt der Schwimmkolben das Schmiermittelreservoir in dem Ausgleichsbehälter 150. Im Falle einer translatorischen Verschiebung der Walze und damit der Spindel 110 stellt sich der Schwimmkolben 154 automatisch, ohne externe Einwirkung, so ein, dass - je nach Bedarf - eine vergrößerte oder verkleinerte Menge an Schmiermittel für den Schmiermittelkreislauf bereitgestellt wird.

In allen Figuren ist beispielsweise der Rücklaufkanal 113 radial nach außen versetzt an der Peripherie der Spindel ausgebildet. Die Stärke d der Außenwand dieses Kanals sollte erfindungsgemäß einen vorgegebenen Dickenschwellenwert nicht übersteigen, wobei der Dickenschwellenwert so gewählt ist, dass eine gewünschte Wärmemenge des in dem Kanal fließenden Schmiermittels über die Außenwand 118 an die Umgebung abgegeben werden kann. In der Regel sollte deshalb die Außenwand 118 des Kanals bzw. der Spindel möglichst dünn und aus gut wärmeleitfähigem Material gebildet sein, um eine möglichst große Wärmemenge des bei seinem Fluss durch die Drehlager 120, 130 stark erwärmten Schmiermittels an die Umgebungsluft abgeben zu können.

Das Schutzrohr und der Ausgleichsbehälter drehen sich bei einer Rotation der Spindel typischerweise mit.

Vorteilhafterweise können Schmiermittel-Schaugläser zur Inspektion und als Einfüll-Auslassöffnung zum periodischen Ölaustausch vorgesehen sein. Die Vorteile der erfindungsgemäßen Vorrichtung sind das autarke System ohne wartungsanfällige Bauteile, geringe Investitions- und Betriebskosten, die Sicherstellung einer guten Schmier- und Kühlleistung an den Hochleistungsspindeln, und durch das autarke volumenregulierte System wird ein Umherschwappen von Schmiermittel vermieden.

### Bezugszeichenliste

- 100: Vorrichtung
- 110: Spindel
- 112: Hinlaufkanal
- 113: Rücklaufkanal
- 114: Außenverzahnung der Spindel an deren walzenseitigem Ende
- 116: Außenverzahnung der Spindel an deren antriebsseitigem Ende
- 117: Verbindungskanal
- 118: Außenwand der Spindel oder das Schutzrohr
- 120: antriebsseitiges Drehlager
- 121: Schmiermittelraum in dem antriebsseitigen Drehlager
- 122: antriebseitige Hülse
- 123: Innenverzahnung der antriebsseitigen Hülse
- 124: radiale Trennwand in der antriebsseitigen Hülse
- 126: antriebsseitige Abdichtung des Schmiermittelraumes in der antriebsseitigen Hülse
- 130: walzenseitiges Drehlager
- 131: Schmiermittelraum in dem walzenseitigen Drehlager
- 132: walzenseitige Hülse
- 133: Innenverzahnung in der walzenseitigen Hülse
- 134: radiale Trennwand in der walzenseitigen Hülse
- 136: Ringdichtung
- 140: Pumpeinrichtung
- 140-1: erste Pumpeinrichtung
- 140-2: zweite Pumpeinrichtung
- 142: Schmiermittelkolben
- 143: Festseite des Schmiermittelkolbens
- 144: Losseite des Schmiermittelkolbens
- 145: Teilkanal in dem Kanalabschnitt der Pumpeinrichtung
- 146: Teilkanal in dem Kanalabschnitt der Pumpeinrichtung
- 147: Teilkanal in dem Kanalabschnitt der Pumpeinrichtung
- 148: Rückschlagventile
- 150: Ausgleichsbehälter
- 152: Ausgleichszylinder des Ausgleichsbehälters
- 154: Schwimmkolben
- 155: Stirnseite des Schwimmkolbens
- 156: Stirnseite des Schwimmkolbens
- 160: Kugelgelenkverbindung
- 200: Antriebseinrichtung
- 210: Abtriebswelle der Antriebseinrichtung
- 300: Zapfen der Walze

- d: Stärke / Dicke der Außenwand der Spindel
- G: Getriebe
- M: Motor

## Patentansprüche

1. Vorrichtung (100) zum Übertragen eines Drehmomentes von einer Antriebseinrichtung (200) auf eine Walze in einem Walzgerüst zum Walzen von Walzgut, aufweisend:
eine Spindel (110);
ein antriebsseitiges Drehlager (120) zum Drehkoppeln der Spindel (110) mit der Abtriebswelle (210) der Antriebseinrichtung (200);
ein walzenseitiges Drehlager (130) zum Drehkoppeln der Spindel (110) mit einem Zapfen (300) der Walze, wobei in dem walzenseitigen Drehlager (130) ein Schmiermittelraum (131) ausgebildet ist; und
mindestens eine in einen Kreislauf für flüssiges Schmiermittel eingebaute Pumpeinrichtung (140) zum Fördern des flüssigen Schmiermittels in dem Kreislauf;
wobei im Bereich der Spindel (110) ein Hinlaufkanal (112) und ein Rücklaufkanal (113) für das Schmiermittel ausgebildet sind, welche fluidleitend mit dem Schmiermittelraum (131) in dem walzenseitigen Drehlager verbunden sind;
**dadurch gekennzeichnet,**
**dass** in dem antriebsseitigen Drehlager (120) ein Schmiermittelraum (121) ausgebildet ist; und
**dass** die Schmiermittelräume in dem walzenseitigen und dem antriebsseitigen Drehlager über den Hinlaufkanal (112) und den Rücklaufkanal (113) fluidleitend miteinanderverbunden sind, wodurch der Kreislauf für das Schmiermittel geschlossen ausgebildet ist.

2. Vorrichtung (100) nach Anspruch 1,
**dadurch gekennzeichnet, dass**
das walzenseitige Drehlager (130) eine mit dem Zapfen (300) der Walze drehfest verbundene walzenseitige Hülse (132) aufweist, in welcher das walzenseitige Ende der Spindel über seine Außenverzahnung (114) mit einer Innenverzahnung (133) der walzenseitigen Hülse drehgekoppelt in Eingriff steht.

3. Vorrichtung (100) nach Anspruch 2,
**dadurch gekennzeichnet, dass**
der Schmiermittelraum (131) in dem walzenseitigen Drehlager (130) zu dem Zapfen (300) der Walze hin durch eine sich im Innern der walzenseitigen Hülse radial erstreckende Trennwand (134), in radialer Richtung durch die walzenseitige Hülse (132) und zur Antriebsseite hin durch eine auf die Spindel (110) aufgesetzte Ringdichtung (136) abgedichtet und begrenzt ist.

4. Vorrichtung (100) nach einem der vorangegangenen Ansprüche,
**dadurch gekennzeichnet, dass**
das antriebsseitige Drehlager (120) eine mit der Abtriebswelle (210) der Antriebseinrichtung (200) drehfest verbundene antriebsseitige Hülse (122) aufweist, in welcher das antriebsseitige Ende der Spindel (110) über seine Außenverzahnung (116) mit einer Innenverzahnung (123) der antriebsseitigen Hülse drehgekoppelt in Eingriff steht.

5. Vorrichtung (100) nach Anspruch 4,
**dadurch gekennzeichnet, dass**
der Schmiermittelraum (121) in dem antriebsseitigen Drehlager (120) zu der Antriebseinrichtung (200) hin durch eine sich im Innern der antriebsseitigen Hülse (120) radial erstreckende Trennwand (124), in radialer Richtung durch die antriebsseitige Hülse (122) und zu der Walzenseite hin durch eine auf die Spindel (110) aufgesetzte Ringdichtung (126) abgedichtet und begrenzt ist.

6. Vorrichtung (100) nach einem der Ansprüche 3 oder 5,
**dadurch gekennzeichnet, dass**
das antriebsseitige und das walzenseitige Drehlager (120, 130) derart versetzt zueinander angeordnet sind, dass die Abtriebswelle (210) der Antriebseinrichtung und der Zapfen (300) der Walze nicht miteinander fluchten; die mindestens eine Pumpeinrichtung (140) durch einen Kanalabschnitt des Kreislaufs gebildet ist, welcher den mit dem Rücklaufkanal (113) verbundenen Schmiermittelraum (131) in vorzugsweise dem walzenseitigen Drehlager (130) mit dem Hinlaufkanal (112) im Bereich der Spindel (110) fluidleitend verbindet; und
die Pumpeinrichtung (140) weiterhin einen radial außermittig vorzugsweise an der walzenseitigen Stirnseite der Spindel (110) gelagerten Schmiermittelkolben (142) mit einer Festseite (143) und einer Losseite (144) aufweist, wobei der Schmiermittelkolben mit seiner Festseite an der Trennwand (134) in der vorzugsweise walzenseitigen Hülse (130) in axialer Richtung festgelegt und mit seiner Losseite (144) in einem Teilkanal (145) des Kanalabschnitts an der vorzugsweise walzenseitigen Stirnseite der Spindel (110) verschiebbar gelagert ist, wobei der Teilkanal (145) und der Schmiermittelkolben (142) eine erste Kolben-Zylinder-Einheit bilden.

7. Vorrichtung (100) nach Anspruch 6,
**dadurch gekennzeichnet, dass**
der Kanalabschnitt eine Mehrzahl von sternförmig angeordneten fluidleitend miteinander kommunizierenden Teilkanälen (145, 146, 147) aufweist, von denen eine erste Anzahl (146) in den Schmiermittelraum (131) in vorzugsweise dem walzenseitigen Drehlager (130) mündet, von denen eine zweite Anzahl (147) in den Hinlaufkanal (112) im Bereich der Spindel mündet, und von denen ein weiterer Teilkanal den Teilkanal (145) der ersten Kolben-Zylinder-Einheit bildet; und
die erste Anzahl von Teilkanälen (146) zu dem Schmiermittelraum (131) in vorzugsweise dem walzenseitigen Drehlager hin und die zweite Anzahl von Teilkanälen (147) zu dem Hinlaufkanal (112) im Bereich der Spindel (110) hin mit Rückschlagventilen (148) verschließbar sind.

8. Vorrichtung (100) nach Anspruch 6 oder 7,
**dadurch gekennzeichnet, dass**
eine Mehrzahl von Pumpeinrichtungen (140-1, 140-2) an vorzugsweise der walzenseitigen Stirnseite der Spindel über den Umfang verteilt angeordnet sind, wobei die Kanalabschnitte der einzelnen Pumpeinrichtungen (140-1, 140-2) in dem Kreislauf jeweils fluidleitend parallel geschaltet sind.

9. Vorrichtung (100) nach einem der vorangegangenen Ansprüche,
**dadurch gekennzeichnet, dass**
ein Ausgleichsbehälter (150) als Reservoir für das flüssige Schmiermittel vorgesehen ist, welcher/welches fluidleitend mit dem Kreislauf für das Schmiermittel verbunden ist.

10. Vorrichtung (100) nach Anspruch 9,
**dadurch gekennzeichnet, dass**
der Ausgleichsbehälter (150) in Form einer zweiten Kolben-Zylinder-Einheit ausgebildet ist, wobei ein vorzugsweise ringförmiger Ausgleichszylinder (152) an der Außenseite der Spindel und vorzugsweise koaxial zu deren Längsachse angeordnet ist; und
in dem ringförmigen Ausgleichszylinder ein ringförmiger Schwimmkolben (154) axial verschiebbar geführt ist, wobei der Schwimmkolben mit seiner einen Stirnseite (155) dem Druck der Umgebungsluft ausgesetzt ist und mit seiner anderen Stirnseite (156) das Reservoir für das Schmiermittel begrenzt.

11. Vorrichtung (100) nach einem der vorangegangenen Ansprüche,
**dadurch gekennzeichnet, dass**
der Hinlaufkanal (112) für das Schmiermittel als axiale Bohrung im Bereich der neutralen Faser der Spindel (110) und der Rücklaufkanal (113) radial nach außen versetzt, z. B. als Koaxialkanal, an der Peripherie der Spindel ausgebildet ist, oder umgekehrt.

12. Vorrichtung (100) nach Anspruch 11,
**dadurch gekennzeichnet, dass**
die Stärke d der Außenwand (118) des radial nach außen versetzt angeordneten Kanals (113) einen vorgegebenen Dickenschwellenwert nicht übersteigt, wobei der Dickenschwellenwert so gewählt ist, dass eine gewünschte Wärmemenge des in dem Kanal fließenden Schmiermittels über die Außenwand (118) an die Umgebung abgegeben werden kann.

13. Vorrichtung (100) nach einem der vorangegangenen Ansprüche,
**dadurch gekennzeichnet, dass**
eine Kugelgelenkverbindung (160) vorgesehen ist zum Verbinden der walzenseitigen Stirnseite der Spindel (110) mit der Trennwand (134) in der walzenseitigen Hülse (130).

## Claims

1. Device (100) for transmission of a torque from drive equipment (200) to a roll in a roll stand for the rolling of rolling material, comprising:
a spindle (110);
a drive-side rotary bearing (120) for rotational coupling of the spindle (110) with the drive output shaft (210) of the drive equipment (200);
a roll-side rotary bearing (130) for rotational coupling of the spindle (110) with a pin (300) of the roll, wherein a lubricant chamber (131) is formed in the roll-side rotary bearing (130); and
at least one pump device (140), which is incorporated in a circuit for liquid lubricant, for conveying the liquid lubricant in the circuit;
wherein a forward run channel (112) and a return run channel (113) for the lubricant are formed in the region of the spindle (110) and are fluid-conductively connected with the lubricant chamber (131) in the roll-side rotary bearing;
**characterised in that**
a lubricant chamber (121) is formed in the drive-side rotary bearing (120); and
the lubricant chambers in the roll-side and drive-side rotary bearings are fluid-conductively connected together by way of the forward run channel (112) and the return run channel (113), whereby the circuit for the lubricant is formed to be closed.

2. Device (100) according to claim 1, **characterised in that**
the roll-side rotary bearing (130) comprises a roll-side sleeve (132) which is connected with the pin (300) of the roll to be secure against relative rotation and in which the roll-side end of the spindle is disposed by way of its outer toothing (114) in engagement with an inner toothing (133) of the roll-side sleeve to produce rotational coupling.

3. Device (100) according to claim 2, **characterised in that**
the lubricant chamber (131) in the roll-side rotary bearing (130) is sealed and bounded towards the pin (300) of the roll by a partition wall (134) extending radially in the interior of the roll-side sleeve, in radial direction by the roll-side sleeve (132) and towards the drive side by an annular seal (136) placed on the spindle (110).

4. Device (100) according to any one of the preceding claims, **characterised in that**
the drive-side rotary bearing (120) has a drive-side sleeve (122) which is connected with the drive output shaft (210) of the drive equipment (200) to be secure against relative rotation and in which the drive-side end of the spindle (110) is disposed by way of its outer toothing (116) in engagement with an inner toothing (123) of the drive-side sleeve to produce rotational coupling.

5. Device (100) according to claim 4, **characterised in that**
the lubricant chamber (121) in the drive-side rotary bearing (120) is sealed and bounded towards the drive equipment (200) by a partition wall (124) extending radially in the interior of the drive-side sleeve (120), in radial direction by the drive-side sleeve (122) and towards the roll side by an annular seal (126) placed on the spindle (110).

6. Device (100) according to one of claims 3 and 5, **characterised in that** the drive-side and roll-side rotary bearings (120, 130) are so arranged offset relative to one another that the drive output shaft (210) of the drive equipment and the pin (300) of the roll are not in alignment with one another;
the at least one pump device (140) is formed by a channel section of the circuit, which channel section fluid-conductively connects the lubricant chamber (131), which is connected with the return run channel (113), preferably in the roll-side rotary bearing (130) with the return run channel (112) in the region of the spindle (110); and
the pump device (140) further comprises a lubricant piston (142), which is radially eccentrically mounted preferably at the roll-side end of the spindle (110), with a fixed side (143) and a movable side (144), wherein the lubricant piston is fixed in axial direction by its fixed side to the partition wall (134) in the sleeve (130) preferably at the roll side and is displaceably mounted by its movable side (144) in a sub-channel (145) of the channel section at the end, which is preferably at the roll side, of the spindle (110), wherein the sub-channel (145) and the lubricant piston (142) form a first piston/cylinder unit.

7. Device (100) according to claim 6, **characterised in that**
the channel section comprises a plurality of sub-channels (145, 146, 147), which are arranged in star shape and fluid-conductively connected with one another and of which a first number (146) opens into the lubricant chamber (131) in the rotary bearing (130) preferably at the roll side, a second number (147) opens into the return run channel (112) in the region of the spindle and a further sub-channel forms the sub-channel (145) of the first piston/cylinder unit; and
the first number of sub-channels (146) is closable towards the lubricant chamber (131) in the rotary bearing preferably at the roll side and the second number of sub-channels (147) is closable towards the return run channel (112) in the region of the spindle (110) by non-return valves (148).

8. Device (100) according to claim 6 or 7, **characterised in that**
a plurality of pump devices (140-1, 140-2) is arranged at the end, which is preferably at the roll side, of the spindle to be distributed over the circumference, wherein the channel sections of the individual pump devices (140-1, 140-2) are respectively fluid-conductively connected in parallel in the circuit.

9. Device (100) according to any one of the preceding claims, **characterised in that**
a compensating container (150) is provided as reservoir for the liquid lubricant and is fluid-conductively connected with the circuit for the lubricant.

10. Device (100) according to claim 9, **characterised in that**
the compensating container (150) is constructed in the form of a second piston/cylinder unit, wherein a preferably annular compensating cylinder (152) is arranged at the outer side of the spindle and preferably coaxial with respect to the longitudinal axis thereof; and an annular floating piston (154) is guided in the annular compensating cylinder to be axially displaceable, wherein the floating piston at one end (155) thereof is subjected to the pressure of the ambient air and at the other end thereof (156) bounds the reservoir for the lubricant.

11. Device (100) according to any one of the preceding claims, **characterised in that**
the forward run channel (112) for the lubricant is formed as an axial bore in the region of the neutral axis of the spindle (110) and the return run channel (113) is radially offset outwardly, for example as a coaxial channel, at the periphery of the spindle or vice versa.

12. Device (100) according to claim 11, **characterised in that**
the thickness d of the outer wall (118) of the channel (113) arranged to be offset radially outwardly does not exceed a predetermined thickness threshold value, wherein the thickness threshold value is so selected that a desired quantity of heat of the lubricant flowing in the channel can be delivered via the outer wall (118) to the environment.

13. Device (100) according to any one of the preceding claims, **characterised in that**
a ball joint connection (160) is provided for connecting the roll-side end of the spindle (110) with the partition wall (134) in the roll-side sleeve (130).

## Revendications

1. Dispositif (100) destiné à transférer un couple de rotation d'un mécanisme d'entraînement (200) à un cylindre dans une cage de laminoir destinée au laminage d'un produit à laminer, présentant :
une broche (110) ;
un palier tournant (120) du côté de l'entraînement destiné à l'accouplement rotatif de la broche (110) à l'arbre de sortie (210) du mécanisme d'entraînement (200) ;
un palier tournant (130) du côté du cylindre destiné à l'accouplement rotatif de la broche (110) à un tourillon (300) du cylindre ; dans lequel un espace (131) réservé à un lubrifiant est réalisé dans le palier tournant (130) du côté du cylindre ; et
au moins un mécanisme de pompage (140) intégré dans un circuit pour un lubrifiant liquide destiné à transporter le lubrifiant liquide dans le circuit ;
dans lequel, dans la zone de la broche (110), sont réalisés un canal d'alimentation (112) et un canal d'évacuation (113) pour le lubrifiant, qui sont reliés, de manière à guider le fluide, à l'espace (131) réservé à un lubrifiant dans le palier tournant du côté du cylindre ;
**caractérisé**
**en ce que**, dans le palier tournant (120) du côté de l'entraînement, est réalisé un espace (121) réservé au lubrifiant ; et
**en ce que** les espaces réservés au lubrifiant dans le palier tournant du côté du cylindre et dans le palier tournant du côté de l'entraînement sont reliés l'un à l'autre de manière à guider le fluide par l'intermédiaire du canal d'alimentation (112) et du canal d'évacuation (113), raison pour laquelle le circuit est réalisé sous la forme d'un circuit fermé pour le lubrifiant.

2. Dispositif (100) selon la revendication 1,
**caractérisé**
**en ce que** le palier tournant (130) du côté du cylindre présente un manchon du côté du cylindre relié en antirotation au tourillon (300) du cylindre, dans lequel l'extrémité de la broche, du côté du cylindre, entre en engrènement via un accouplement rotatif par l'intermédiaire de sa denture externe (114) avec une denture interne (133) du manchon du côté du cylindre.

3. Dispositif (100) selon la revendication 2,
**caractérisé**
**en ce que** l'espace (131) réservé au lubrifiant dans le palier tournant (130) du côté du cylindre est rendu étanche et est délimité en direction du tourillon (300) du cylindre par une paroi de séparation (134) qui s'étend en direction radiale à l'intérieur du manchon du côté du cylindre, en direction radiale par l'intermédiaire du manchon (132) du côté du cylindre et en direction du côté de l'entraînement par un joint d'étanchéité annulaire (136) qui vient se disposer sur la broche (110).

4. Dispositif (100) selon l'une quelconque des revendications précédentes,
**caractérisé**
**en ce que** le palier tournant (120) du côté de l'entraînement présente un manchon (122) du côté de l'entraînement relié en antirotation à l'arbre de sortie (210) du mécanisme d'entraînement (200), dans lequel l'extrémité de la broche (110) du côté de l'entraînement entre en engrènement via un accouplement rotatif par l'intermédiaire de sa denture externe (116) avec une denture interne (123) du manchon du côté de l'entraînement.

5. Dispositif (100) selon la revendication 4,
**caractérisé**
**en ce que** l'espace (121) réservé au lubrifiant dans le palier tournant (120) du côté de l'entraînement est rendu étanche et est délimité en direction du mécanisme d'entraînement (200) par une paroi de séparation (124) qui s'étend en direction radiale à l'intérieur du manchon (120) du côté de l'entraînement, en direction radiale par l'intermédiaire du manchon (122) du côté de l'entraînement et en direction du côté du cylindre par un joint d'étanchéité annulaire (126) qui vient se disposer sur la broche (110).

6. Dispositif (100) selon l'une quelconque des revendications 3 ou 5,
**caractérisé**
**en ce que** le palier tournant (120) du côté de l'entraînement et le palier tournant (130) du côté du cylindre sont disposés en décalage l'un par rapport à l'autre d'une manière telle que l'arbre de sortie (210) du mécanisme d'entraînement et le tourillon (300) du cylindre ne sont pas alignés l'un par rapport à l'autre; ledit au moins un mécanisme de pompage (140) est réalisé via un tronçon de canal du circuit, qui relie de manière à guider le fluide l'espace (131) réservé au lubrifiant relié au canal d'évacuation (113), de préférence dans le palier tournant (130) du côté du cylindre, au canal d'alimentation (112) dans la zone de la broche (110) ; et
le mécanisme de pompage (140) présente en outre un piston (142) destiné au lubrifiant, monté en position excentrique en direction radiale, de préférence contre le côté avant de la broche (110) du côté du cylindre, comprenant un côté fixe (143) et un côté mobile (144) ; dans lequel le piston destiné au lubrifiant est fixé à demeure en direction axiale avec son côté fixe à la paroi de séparation (134) dans le manchon (130) de préférence du côté du cylindre et est monté, avec son côté mobile (144) dans un canal partiel (145) du tronçon de canal, en mobilité contre le côté avant de la broche (110), de préférence du côté du cylindre ; dans lequel le canal partiel (145) et le piston (142) destiné au lubrifiant forment une première unité du type à piston et à cylindre.

7. Dispositif (100) selon la revendication 6,
**caractérisé**
**en ce que** le tronçon de canal présente une multitude de canaux partiels (145, 146, 147) qui communiquent les uns avec les autres de manière à guider le fluide, disposés en étoile, un premier nombre (146) parmi cette multitude débouchant dans l'espace (131) réservé au lubrifiant de préférence dans le palier tournant (130) du côté du cylindre, un deuxième nombre (147) parmi cette multitude débouchant dans le canal d'alimentation (112) dans la zone de la broche, et un canal partiel supplémentaire parmi cette multitude formant le canal partiel (145) de la première unité du type à piston et à cylindre ; et
le premier nombre de canaux partiels (146) peuvent être fermés par rapport à l'espace (131) réservé au lubrifiant de préférence dans le palier tournant du côté du cylindre et le deuxième nombre de canaux partiels (147) peuvent être fermé par rapport au canal d'alimentation (112) dans la zone de la broche (110), avec des soupapes de non-retour.

8. Dispositif (100) selon l'une quelconque des revendications 6 ou 7,
**caractérisé**
**en ce qu'**une multitude de mécanismes de pompage (140-1, 140-2) sont disposés contre de préférence le côté avant de la broche du côté du cylindre en étant répartis sur la périphérie ; dans lequel les tronçons de canaux des mécanismes de pompage individuels (140-1, 140-2) sont montés en parallèle dans le circuit de manière à respectivement guider le fluide.

9. Dispositif (100) selon l'une quelconque des revendications précédentes,
**caractérisé**
**en ce que** l'on prévoit un récipient de compensation (150) sous la forme d'un réservoir pour le lubrifiant liquide, qui est relié, de manière à guider le fluide, au circuit destiné au lubrifiant.

10. Dispositif (100) selon la revendication 9,
**caractérisé**
**en ce que** le récipient de compensation (150) est réalisé sous la forme d'une deuxième unité du type à piston et à cylindre; dans lequel un cylindre de compensation (152) possédant de préférence une configuration de forme annulaire est disposé du côté externe de la broche et de préférence en position coaxiale par rapport à l'axe longitudinal de cette dernière ; et
dans le cylindre de compensation possédant une configuration de forme annulaire, est guidé, de manière à pouvoir se déplacer en direction axiale, un piston flottant (154) de forme annulaire ; dans lequel le piston flottant est exposé avec son côté avant (155) à la pression de l'air ambiant et délimite, avec son autre côté avant (156), le réservoir destiné au lubrifiant.

11. Dispositif (100) selon l'une quelconque des revendications précédentes,
**caractérisé**
**en ce que** le canal d'alimentation (112) pour le lubrifiant est réalisé sous la forme d'un alésage axial dans la zone de la phase neutre de la broche (110) et du canal d'évacuation(113), en étant décalé en direction radiale vers l'extérieur, par exemple sous la forme d'un canal coaxial, à la périphérie de la broche, ou inversement.

12. Dispositif (100) selon la revendication 11,
**caractérisé**
**en ce que** l'épaisseur de la paroi externe (118) du canal (113) disposée en décalage radial vers l'extérieur, ne dépasse pas vers le haut une valeur seuil d'épaisseur prédéfinie ; dans lequel la valeur seuil d'épaisseur est sélectionnée d'une manière telle que l'on peut évacuer une quantité de chaleur désirée du lubrifiant qui s'écoule dans le canal, par l'intermédiaire de la paroi externe (118), dans l'environnement.

13. Dispositif (100) selon l'une quelconque des revendications précédentes,
**caractérisé**
**en ce que** l'on prévoit une articulation du type à rotule (160) pour la liaison du côté avant de la broche (110) du côté du cylindre avec la paroi de séparation (134) dans le manchon (130) du côté du cylindre.
